Europäisches Patentamt

(19) European Patent Office

Office européen des brevets

(11) Publication number: **0 083 838**
**B1**

## EUROPEAN PATENT SPECIFICATION

(45) Date of publication of patent specification: **28.05.86**

(51) Int. Cl.⁴: **G 11 B 7/08**

(21) Application number: **82306339.1**

(22) Date of filing: **29.11.82**

(54) Focusing initialisation control system.

(30) Priority: **31.12.81 US 336245**

(43) Date of publication of application:
**20.07.83 Bulletin 83/29**

(45) Publication of the grant of the patent:
**28.05.86 Bulletin 86/22**

(84) Designated Contracting States:
**DE FR GB NL**

(56) References cited:
**DE-A-2 810 570**
**GB-A-2 027 881**
**US-A-3 974 327**

**Patent Abstracts of Japan, vol. 6, no. 206, 19
October 1982**

(73) Proprietor: **MAGNETIC PERIPHERALS INC.**
**8100-34th Avenue South**
**Minneapolis Minnesota 55440 (US)**

(72) Inventor: **Miller, Christopher**
**3620 Trailhill Place**
**Colorado Springs Colorado 80906 (US)**

(74) Representative: **Caro, William Egerton et al
J. MILLER & CO. Lincoln House 296-302 High
Holborn
London WC1V 7JH (GB)**

## Description

This invention relates to focusing initialisation control systems, for example, for optical recording systems. The present invention may be used when an optical recording system is first turned on or must be reactivated when it is in an out of focus condition for some reason.

The present invention may use, as an input, the analog signals derived from known focusing systems which are designed to operate an objective lens focusing system of an optical recording system when a near-focus condition has already been achieved. However, such objective lens focusing systems which operate from a given near-focus condition cannot achieve that near-focus condition from a condition in which the objective lens is far from a focus condition. Thus, the present invention seeks to provide a focusing initialisation control system to drive an objective lens in an optical recording system to a sufficiently near-focus condition that a near-focus control system can take over driving the objective lens.

US—A—3 974 327 relates to a focusing system for an optical data recording device. This focusing system is such that the objective lens is initially moved from a position furthest away from the recording media towards the recording media and towards a focus condition. When a near-focus condition is detected, a control system protects the objective lens from coming into contact with the recording media by immediately driving it away from the recording media leaving it in a near-focus condition. This is in distinction to the present invention which, in a preferred embodiment, detects the near-focus condition and activates a near-focus automatic control system while maintaining a protective watch on the focusing function.

A near-focus control system is disclosed in US—A—4 123 652. This near-focus control system has four focusing elements arranged in a square or quadrature system to detect by means of diode light detectors a focusing light spot and to produce four separate output signals. US—A—4 123 652 employs an astigmatic focusing system. The output signals of the various detectors may be combined in a particular fashion to produce a signal suitable for controlling a focusing system in a near-focus condition. Of course, the detectors will continuously produce an output signal as long as light is detected by the detectors.

The near-focus control system described in US—A—4 123 652 is characterised in that the system will produce a zero level output signal when in a far out-of-focus condition either too far from the recording media or too close to the recording media as well as at an exact focus condition. In a near-focus condition, the outputs of the detectors are combined in such a fashion as to produce a bipolar signal when an objective lens is in a near-focus condition on either side of the focus condition. The shape of the light impinging on the detectors in these near-to-focus conditions as well as the output signal combinations to be used with the detectors in order to produce an output signal are described.

Other focusing systems may exist and may be developed with which a focusing initialisation control system according to the present invention may be used. For example, they may be used with a quadrature detector in which the focusing system produces the same type of output signal as described herein in which a bipolar signal has peaks at near-to-focus conditions. A two detector system may be used in astigmatic or other focusing systems to produce a bipolar output signal. An output signal may be generated using other patterns of detector. The present invention is not limited as to a particular focusing system or as to the detection system used and will work with any focusing system which may be arranged to provide the appropriate variable output signal having a bipolar relationship to the near-to-focus and focus conditions.

According to GB—A—2027881 there is known a focusing initialisation control system for an optical recording device having an objective lens disposed relatively near recording media and controlled by a focusing control system having a plurality of light detectors, said focusing initialisation system having: first signal receiving means for receiving as an input an analog A + B signal from two light detectors (A, B); second signal receiving means for receiving as an input an analog C + D signal from a further two light detectors (C, D); first comparator means associated with said second signal receiving means for determining that said C + D signal is within a predetermined range, said first comparator means being arranged to produce a second logic output signal; third signal receiving means for receiving as an input an analog "S" curve signal; and third comparator means associated with said third signal receiving means, said third comparator means determining that said input "S" curve signal is less than a certain predetermined value.

According to the present invention said focusing initialisation control system is characterised by second comparator means associated with said first signal receiving means for producing an output logic signal indicative that said A + B signals is within a predetermined range, said second comparator means being arranged to produce a first logic output signal; fourth comparator means associated with said third signal receiving means for determining that said "S" curve signal is greater than a predetermined value, said third and fourth comparator means being arranged to produce a third logic output signal; logic means for combining said first, second and third logic output signals to produce a fourth logic output signal indicative that said objective lens is within the focusing region of a linear region of said "S" curve signal, said logic means being such as to require said "S" curve signal to be within predetermined limits and to require said C + D signal and said A + B signal to be within predetermined limits; and control means responsive to said fourth logic output signal from said logic means for controlling said focus control system to be on when in focusing range.

The system preferably includes first timing means for allowing said objective lens to be within focusing range for a predetermined time before activating said focusing control system.

The system preferably includes second timing means for allowing said objective lens to be outside focusing range for a predetermined time before deactivating said focusing control system.

Said logic means may comprise first NAND gate means connected to receive as a first input said third logic output signal and as a second input said first logic output signal, second NAND gate means connected to receive as a first input said third logic output signal and as a second input said second logic output signal, and third NAND gate means connected to receive as a first input the output of said first gate means and as a second input the output of the second gate means said third gate means producing as an output the said fourth logic signal.

The invention is illustrated, merely by way of example, in the accompanying drawings, in which:—

Figure 1A shows a quadrature pattern of four light detectors for astigmatic focusing in an optical recording system;

Figure 1B shows the astigmatic focusing light pattern on the light detectors for a slightly out-of-focus condition where an objective lens is too close to recording media;

Figure 1C shows the light pattern on the light detectors in a focus condition;

Figure 1D shows the astigmatic focusing light pattern on the light detectors for an out-of-focus condition where an objective lens is slightly out of focus and too far away from the recording media;

Figure 2 is a circuit diagram of a focusing servo system supplied with inputs from the light detectors and developing an "S" curve signal for focusing;

Figure 3 shows a focusing servo drive mechanism for driving an objective lens voice coil;

Figures 4A and 4B, placed together in left to right relationship, constitute a circuit diagram of one embodiment of a focusing initialisation control system according to the present invention; and

Figure 5 illustrates signal values at various points in the focusing initialisation control system of Figure 4.

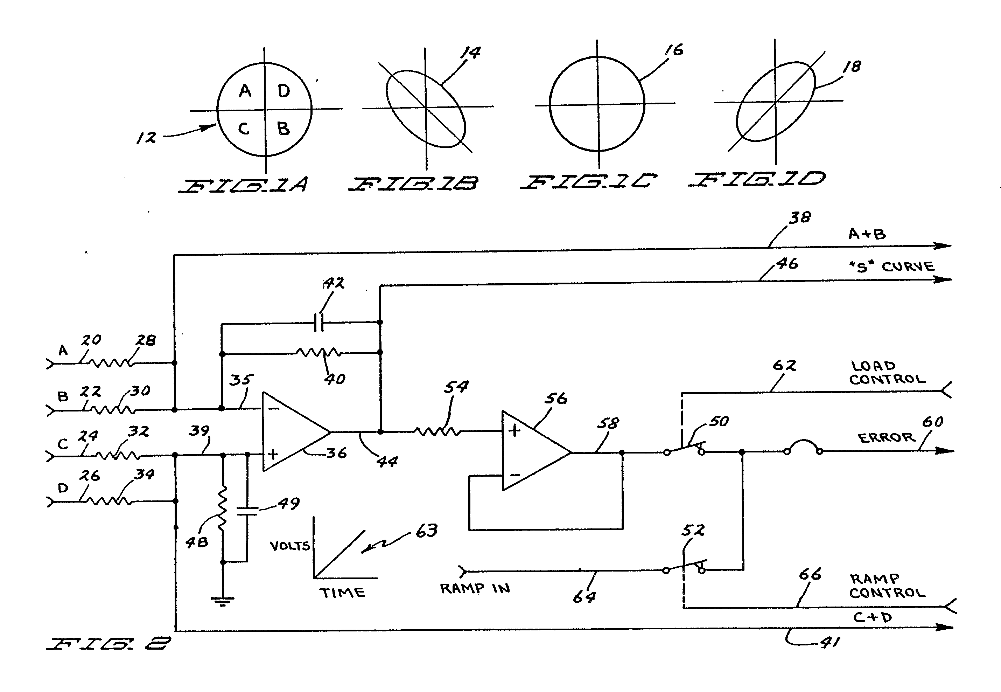

Referring first to Figure 1A, a quadrature detector pattern for use in an optical recording system is shown in which a pattern 12 of light detectors is arranged to cover the four quadrants of an area on which a light beam impinges after reflection from recording media. The light detectors may be conventional light detecting diodes. The four quadrants are labeled, A, B, C, D, a light detector being assigned to that quadrant with that letter and this terminology is used consistently throughout this specification.

Referring now to Figure 1B, an astigmatic light pattern 14 is shown for the case in which an objective lens (not shown) is too close to the recording media when an astigmatic focusing system similar to that described in US—A—3 974 327 is used.

Referring now to Figure 1C, a light pattern 16 represents the generally circular light pattern resulting when the objective lens is essentially in a focus condition on the recording media.

Finally, referring now to Figure 1D, an astigmatic light pattern 18 is shown for the out-of-focus condition, the objective lens being too far away from recording media. The light patterns 14, 18 represented in Figures 1B and 1D respectively represent conditions where the out-of-focus condition of the objective lens is still in a close-to-focus condition. When the objective lens is far out of focus either too close to the recording media or too far away from the recording media, a generally uniform light pattern is produced across the four quadrants shown in Figure 1A, although the light intensity of that pattern is less than the light intensity of the in-focus pattern 16 shown in Figure 1C.

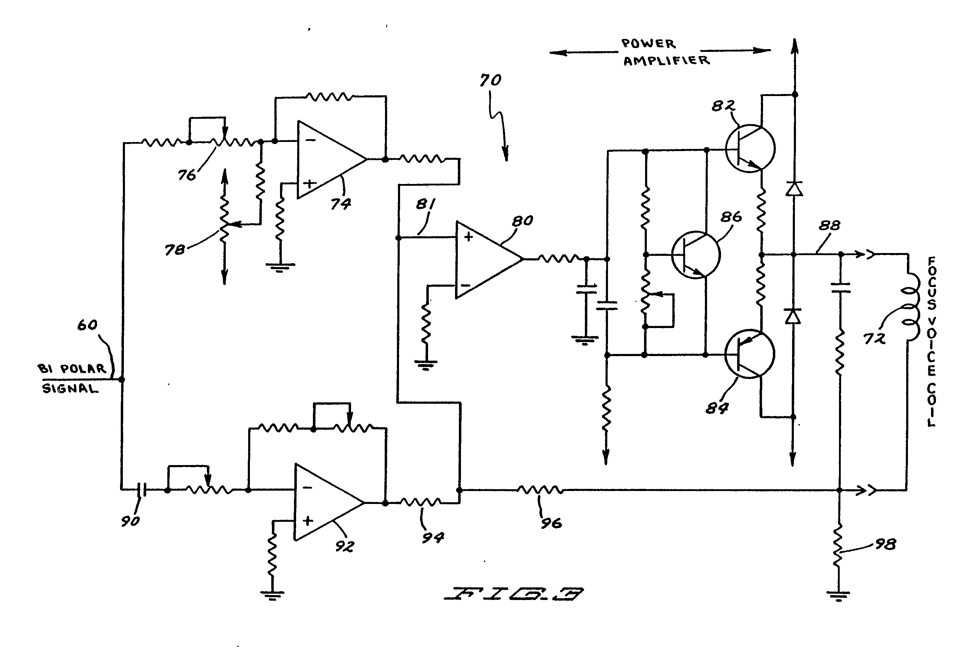

Referring now to Figure 2, there is shown a focusing servo where the input signals from the light detectors arranged in the pattern 12 shown in Figure 1A are supplied as inputs A, B, C, D, on lines 20, 22, 24, 26 where the lines are respectively associated with the light detectors A, B, C, D. Each input line has associated with it a respective load resistor 28, 30, 32, 34.

The A and B inuts on the lines 20, 22, respectively, are summed together on a line 35 and fed to the negative input of an operational amplifier 36. This A + B signal is also provided on an output line 38 to be used elsewhere in the circuit, as will be described. The C and D inputs on the lines 24, 26 are summed together on a line 39 and fed to the positive input of the operational amplifier 36. The C + D signal is also provided on an output line 41 to be used elsewhere as will be described later.

A simple filter consisting of a parallel arrangement of a resistor 40 and a capacitor 42 is connected in a feedback loop between the negative input of the operational amplifier 36 and its output on a line 44. The output of the operational amplifier 36 is also provided as an "S" curve signal on a line 46. Another simple filter consisting of a parallel arrangement of a resistor 48 and a capacitor 49 is connected between the positive input of the operational amplifier 36 and ground potential.

The output of the operational amplifier 36 is connected through a resistor 54 to the positive input of an operational amplifier 56. The output of the operational amplifier 56 on a line 58 is fed through a normally open analog switch 50 to provide an output error signal on a line 60 to drive a regular focusing servo control loop system. The switch 50 is controlled by a LOAD CONTROL signal provided on a line 62. A RAMP IN signal 63 is provided on a line 64 from an external source. The RAMP IN signal is a progressively rising voltage with time signal for progressively driving the objective lens focusing system from a position farthest away from the recording media towards the recording media to initiate a focusing initialisation cycle.

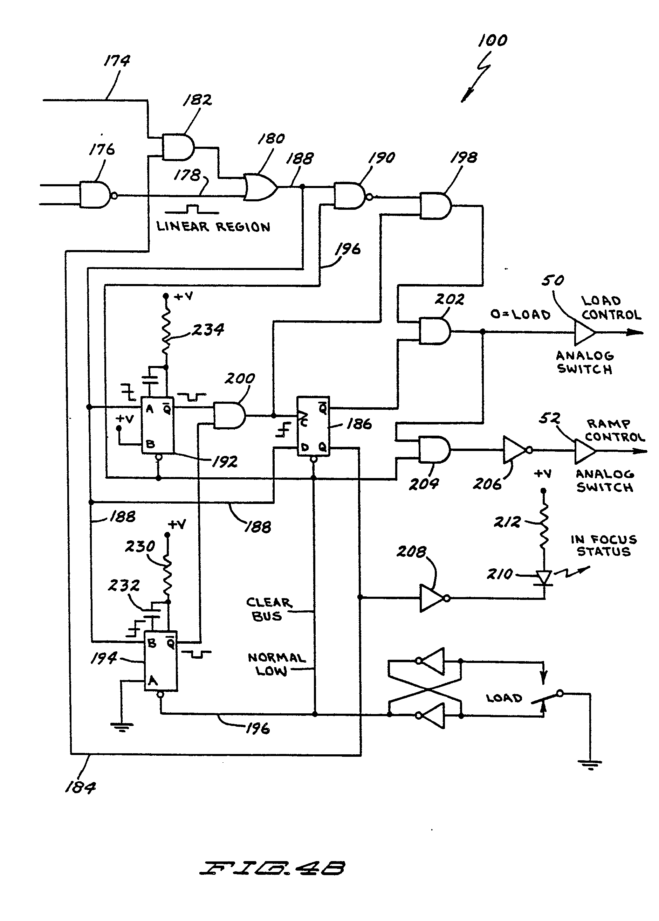

This RAMP IN signal may be generated in a number of well-known ways. The RAMP IN signal is connected through a normally closed switch 52 to the line 60. The switch 52 is controlled by an input RAMP CONTROL signal on a line 66. The switches 50, 52 are analog switches and are shown in greater detail in Figure 4.

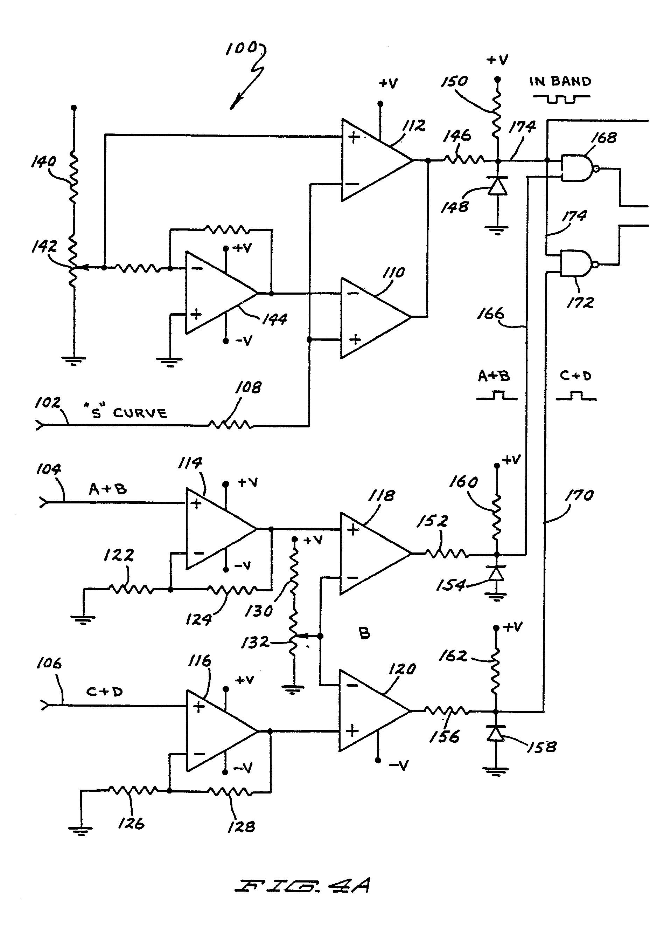

Referring now to Figure 3 there is illustrated a circuit diagram of a focusing servo drive mechanism 70 for developing an output drive signal for an objective lens focus voice coil 72 from the error signal on the line 60. The focusing servo drive mechanism of Figure 3 comprises an operational amplifier 74 having a variable gain control resistor 76 and an offset bias control 78 for establishing the position of the objective lens which is to be taken as the centre point in connection with the error signal. The output from the operational amplifier 74 is connected via a line 81 to the positive input of an operational amplifier 80 which is used to drive a power amplifier circuit composed of transistor 82, 84 in a push-pull arrangement, a transistor 86 operating as the drive transistor. The output of the power amplifier circuit is provided on a line 88 to one side of the focus voice coil 72.

In addition, the error signal is connected through a capacitor 90 to an operational amplifier 92. The output of the operational amplifier 92 is connected through a resistor 94 and summed with the output from the operational amplifier 74 and applied to the positive input of the operational amplifier 80. The summed signal is also supplied as a feedback signal through a resistor 96 to the other side of the focus voice coil 72. The amount of this feedback is controlled by the value of the resistor 96 and a resistor 98 which connects the said other side of the focus voice coil 72 to ground potential from the line 88 of the power amplifier transistors 82, 84.

Referring now to Figures 4A and 4B in which one embodiment of a focusing initialisation control system 100 according to the present invention is shown, the input "S" curve signal (from line 46 of Figure 2) is supplied on an input line 102. The A + B signal (from line 38 of Figure 2) is supplied on an input line 104 and the C + D signal (from line 41 of Figure 2) is supplied on an input line 106.

The input line 102 is connected through a resistor 108 to the positive input of a comparator 110 and the negative input of a comparator 112. The A + B signal on the input line 104 is connected to the positive input of an amplifier 114 and the C + D signal on the input line 106 is connected to the positive input of an amplifier 116. The output of the amplifier 114 is connected to the positive input of a comparator 118 while the output of the amplifier 116 is connected to the positive input of a comparator 120. The amplifiers 114, 116 operate as unity gain buffers to isolate the focusing initialisation control system from the focusing servo system of Figure 2.

Resistors 122, 124 operate to bias the amplifier 114 and resistors 126, 128 operate to bias the amplifier 116. A variable voltage divider circuit consisting of a fixed value resistor 130 and a variable resistor 132 determines a reference direct current input for the negative inputs of the comparators 118, 120. The purpose of this reference direct current input is to provide a threshold reference as will be explained later.

A fixed value resistor 140 and a variable resistor 142 operate as a voltage divider network to provide an input reference voltage to an amplifier 144. This input reference voltage is provided to the negative input of the amplifier 144 so that it operates as an inverter of that reference voltage. The inverted reference voltage is connected to the negative input of the comparator 110. The reference voltage from the variable resistor 142 is connected to the positive input of the comparator 112. The negative input of the comparator 112 is connected to the "S" curve signal from the line 102.

The outputs of the comparators 110, 112 are connected together in what constitutes a wire OR circuit configuration. The output of this OR circuit configuration is connected through a resistor 146 to a diode 148 which receives an input bias voltage through a resistor 150. The output of this node is a TTL compatible logic level voltage. Similarly, the output of the comparator 118 is connected through a resistor 152 to a diode 154 and a resistor 160 and the output of the comparator 120 is connected through a resistor 156 to a diode 158 and a resistor 162 to generate TTL compatible logic level outputs. The resistors 160, 162 provide the bias voltage for the diodes 154, 158 respectively.

The output of the comparator 118, as converted to a TTL logic compatible level, is provided on a line 166 to an input of a NAND gate 168. The output of the comparator 120, as converted to a TTL logic compatible level is provided on a line 170 to an input of a NAND gate 172. The outputs from the comparators 110, 112 are provided on a line 174 to the other input of both NAND gates 168, 172. The outputs of the NAND gates 168, 172 provide both inputs to a NAND gate 176 as shown in Figure 4B.

The output of the NAND gate 176 is provided on a line 178 as one input to an OR gate 180. This output of the NAND gate 176 on the line 178 is called a "linear region" output and is important to an understanding of the present invention as will be explained later. The line 174 carrying the outputs from the comparators 110, 112 is provided as one input to an AND gate 182.

The other input to the AND gate 182 is provided on a line 184 which connects to a Q output of a D type flip-flop 186. The output of the AND gate 182 provides the second input to the OR gate 180. The output of the OR gate 180 is provided on a line 188 as one input to a NAND gate 190. The output of the OR gate 180 on the line 188 is also provided to an A input of a one-shot multivibrator 192. The A input to the one shot multivibrator is a negative edge trigger input. The output of the OR gate 180 on the line 188 is also provided as a B input to a one shot multivibrator 194. The B input to the one shot multivibrator is a positive edge trigger input. The line 188 also goes to the D input of the D type flip-flop 186.

The other input to the NAND gate 190 is from a clear bus 196. The clear bus is normally low level at times when a focus load logic circuit is not operating and the regular focusing servo control loop system of the objective lens focusing system is operating. The focus load logic circuit operates only during the focus range loading time period and at this time, the clear bus goes high level to allow the focus load logic circuit to operate.

The output of the NAND gate 190 is connected as one input to an AND gate 198. The other input of the AND gate 198 is from the output of an AND gate 200. The input to the AND gate 200 comes from the Q output of the one shot multivibrator 192. The other input to the AND gate 200 comes from the Q output of the one shot multivibrator 194. The output of the AND gate 200 is also connected to the clock input of the D type flip-flop 186. This clock input, however, does not mean that the focus load logic circuit is operating on a clock time interval or is clock dependent. The reason for this connection of the output of the AND gate 200 to the clock input of the D type flip-flop 186 will be explained in detail later.

The output of the AND gate 198 is connected to one input of an AND gate 202. The other input to the AND gate 202 is the Q output of the D type flip-flop 186. The output of the AND gate 202 is connected to the switch 50 (Figure 2) which is a load control switch. The output of the AND gate 202 is also connected to one input of an AND gate 204. The other input to the AND gate 204 is from the clear bus 196. The output of the AND gate is connected through an inverter 206 to the switch 52 (Figure 2) which is a ramp control switch. The Q output of the D type flip-flop 186 is connected through the line 184 to one input of the AND gate 182 and is also connected to an inverter 208 to control a LED 210 to give a status display to the operator. A load resistor 212 is connected to a voltage source for the LED 210. The Q output of the D type flip-flop 186, as has been previously described, is the line 184 which is also connected to one input of the AND gate 182.

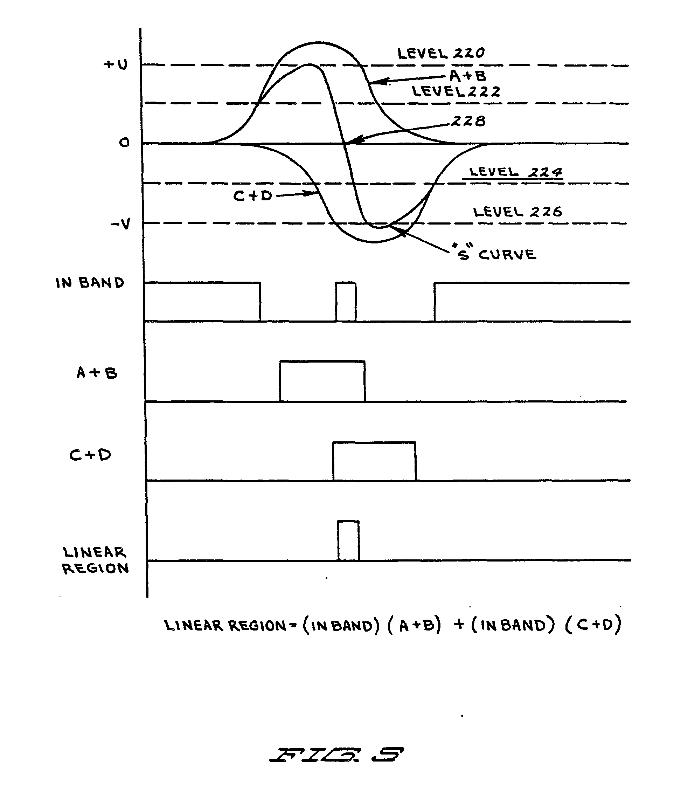

The focus load logic system or focusing initialisation control system according to the present invention requires three inputs and generates two outputs. The inputs are the signals on the line 102, 104, 106 and the outputs drive the switches 50, 52. The input on the line 104 is the A + B signal created by summing the outputs of the detectors A, B. The input on the line 106 is the C + D signal created by summing the outputs of detectors C, D. The "S" curve signal is created by subtracting the C + D signal from the A + B signal. An inverse "S" curve signal could also be generated and used to operate a focusing initialisation control system according to the present invention. The combination of the operational amplifier 144, the comparator 110 and the comparator 112 and the resistor divider network consisting of the resistors 142, 140 create a logic window signal between level 222 and level 224 as shown in Figure 5. This signal is made into a TTL compatible logic signal on the line 174 and is called an "in band" signal. The combination of the operational amplifier 114 and the comparator 118 creates a TTL level corresponding to a level 220 as shown in Figure 5. The operational amplifier 116 and the comparator 120 create a TTL level corresponding to a level 226 as shown in Figure 5. The level 220 and the level 226 are designed to qualify the levels 222, 224. The reason for this is that levels 222, 224 can exist in regions which are far out of focus. The level 220 and the level 226 must both be high in order for the "in band" signal i.e. the level 222 and the level 224 to be valid. The "in band" signal can be high when the objective lens is far away from the focus condition in either direction but it is also high when the objective lens is very close to focus. Therefore, since it is desired to know when in-focus or when the objective lens is close to focus is a true condition, then the A + B signal and the C + D signal are required to indicate when the "in band" signal is in fact indicating that the objective lens is near focus as opposed to being far away from focus.

NAND gates 168, 172, 176 provide this qualifying circuitry. When the "in band" signal and the A + B signal are both high, the output of the NAND gate 168 is low. When the "in band" signal and the C + D signal are both high, the output of the NAND gate 172 is low. The NAND gate 176 will be high when either the NAND gate 168 is low or the NAND gate 172 is low. This high output is an indication of a "linear region" signal. The "linear region" signal is the portion of the "S" curve signal which goes through zero and is indicated at 228 in Figure 5. It is also that portion of the "S" curve signal which is between the levels 222, 224. This region is the region in which the regular focusing servo control loop system should be closed such that the focusing servo drive mechanism will begin following the recording media and maintaining a focus condition. When the "linear region" signal is true and the LOAD CONTROL signal is also true, the result is a control signal that closes the switch 50. This results in closing the servo loop and begins closed loop focused operation. The rising edge of the "linear region" signal also starts the one shot multivibrator 194 into a timing condition at the end of a short time period. At the end of that time period, the "linear region" signal is sampled by the D type flip-flop 186.

This sampling is to determine if the focusing servo system is still within the "linear region" thus indicating that the objective lens is, in fact, still in focus or is beginning to remain in focus with the recording media.

The purpose of the one shot multivibrator 194 and the D type flip-flop 186 is to provide a delay status to a host controller. This means that the one shot multivibrator 194 allows for a settling time of the focusing servo system before an in focus status signal is sent out. This status cushion is accomplished by applying the Q output of the one shot multivibrator 194 through the AND gate 200 which in turn is used as an edge trigger to the D type flip-flop 186. Once the one shot multivibrator 194 has timed out, the rising edge of the Q signal clocks the D type flip-flop 186. When the D type flip-flop 186 is clocked, the level on the D input from the OR gate 180 is transferred to the output Q, Q. If that level is high, when the one shot multivibrator 194 times out, then a focus condition exists and a focus status signal is sent out through the inventor 208. Also, the output Q of the D type flip-flop 186 is sent to the AND gate 202 to maintain a loaded or locked condition. If, however, the line 188 is low level when the one shot multivibrator 194 times out, then there is no focus condition and the process of focusing the objective lens must be reissued. Once the focus condition is achieved, the output from the flip-flop 186 is sent to the AND gate 182 on the line 184. This input along with the "in band" signal going to the AND gate 182 passes through the OR gate 180 which will maintain the focus condition because, once in focus, the A + B signal and the C + D signal go false. In this state, the focus load logic circuit will continue to keep the focusing servo loop closed provided that the "in band" signal remains high. This signal remaining high level indicates that the focus servo loop is still in a focus condition.

The only way for this circuitry to change from the system loaded condition is if the "in band" signal goes low level indicating that the objective lens is no longer in the focus condition. If the "in band" signal goes to a low level, the one shot multivibrator 192 is triggered. At the end of its delay time period, the rising edge of the Q output of the one shot multivibrator 192 again, or also, clocks the D type flip-flop 186. When the D type flip-flop 186 is clocked, the D input thereof must be back to high level. If so, then no change in status is initiated, i.e. the focusing servo loop has recovered and a focus condition still exists. However, if at the end of the time period of the one shot multivibrator 192 the focusing servo loop has not recovered and is still in the out-of-focus condition, the line 188 will be low level indicating an out-of-focus condition. At that time, an out-of-focus status signal is transferred to the output of the D type flip-flop 186 indicating an out-of-focus condition for too long a period of time. At this time the host controller must initiate a new load command.

Referring now to Figure 5, levels 222, 224 are established by the resistor divider network consisting of resistors 140, 142 on the line 174.

However, this direct current level will be or could be determined by other circuitry such as an automatic gain control circuit which is looking at or referencing laser light intensity on the detectors. The level 220 and the level 226 are established by the resistor network consisting of resistors 130, 132. These levels could also be created by an automatic gain control circuit which is looking at or referencing laser light intensity. These two automatic gain control circuits would then make the focus load logic function independent of absolute light level since light level raises and lowers the magnitude of the A + B signal, the C + D signal and the "S" curve signal. Thus, the "S" curve signal would be proportioned relative to light levels.

The time interval of the one shot multivibrator 194 is established by the resistor 230 and the capacitor 232. The time period of the one shot multivibrator 192 is established by the resistor 234 and the capacitor 236. The values for both one shot multivibrators are roughly the same with the resistors 230, 234 being approximately 100 KΩ and the vlaues of the capacitors 232, 236 being approximately 0.01 μF. These values establish a time period of approximately one millisecond. Other values of approximately this time period may be used. The criteria for establishing the time period is how long a time period is acceptable during which the optical recording system may be out-of-focus before corrective action is taken and the controller is notified that no more data should be written or read. That function of determining how long the optical recording system can be out-of-focus before calling for help is determined by the one shot multivibrator 192. The time period and criteria for determining the function of the one shot multivibrator 194 is how long the optical recording system must be in a focus condition before announcing that the optical recording system is operational and closing the focusing servo loop. That time period is established by the one shot multivibrator 194 and approximately one millisecond appears to be a satisfactory time magnitude for establishing that function.

The focus initialisation control system described above provides logic and control circuitry to bring the objective lens from a far out-of-focus start up condition to the point where the focusing system is in a near to focus condition and the regular focusing control or servo circuitry can handle the focusing requirement. Logic is provided to detect this near to focus condition and commence operation of the regular focusing control system. During operation in the focus condition, the focusing initialisation control system provides a monitoring function which, if the system should go to an out-of-focus condition, will reinitialise the focusing procedure or provide a warning that an out-of-focus condition exists, as desired. The focusing initialisation control system will allow the out-of-focus condition to continue for a brief period of time, selectable as conditions require, before starting the re-initialisation or the alarm or warning process.

Similarly, in obtaining an initial near to focus condition for the regular focusing control system, the focusing initialisation control system allows a short time interval to pass allowing the system to achieve stability in the near to focus condition before initialisation the regular focus control system.

US—A—4 123 652 previously referred to show how a system of four light detecting elements, such as diodes, may be used to generate what may be referred to as an "S" curve signal representing a combination of the output values of all four detectors. In addition, these detectors may be used to produce other output signal combinations such as A + B and C + D.

The focusing initialisation control system described above uses three analog signal inputs representing the "S" curve signal, the A + B signal and the C + D signal. These signals may be generated by means shown in U.S. Patent Specification No. 4 123 652 or by other appropriate means. These signals are each separately compared with reference signal levels and three separate logic outputs are generated. These three logic outputs are then used to detect a condition near to focus on the "S" curve where the logic also requires that this near to focus condition is within the "S" curve and not merely as a signal value outside the "S" curve. Once a near to focus condition is detected, a short time interval is allowed to pass and then the standard servo or near focus control system is activated to control focusing in the regular manner. The focusing initialisation control system, however, continuously monitors the previously described analog signals generated in the focusing system. If an out-of-focus condition is detected, a short time interval is allowed to pass so that if the condition is transient and removes itself, no disturbance of the function occurs. However, after the time interval elapses and if a far out-of-focus condition still exists, then a warning may be issued and all use of the optical recording function will cease. The system may be designed to reinitialise itself if desired by the operation.

**Claims**

1. A focusing initialisation control system for an optical recording device having an objective lens disposed relatively near recording media and controlled by a focusing control system having a plurality of light detectors, said focusing initialisation system having: first signal receiving means (104) for receiving as an input an analog A + B signal from two light detectors (A, B); second signal receiving means (106) for receiving as an input an analog C + D signal from a further two light detectors (C, D); first comparator means (120) associated with said second signal receiving means for determining that said C + D signal is within a predetermined range, said first comparator means (120) being arranged to produce a second logic output signal; third signal receiving means (102) for receiving as an input an analog "S" curve signal; and third comparator means (110) associated with said third signal receiving means, said third comparator means (110) determining that said input "S" curve signal is less than a certain predetermined value characterised by second comparator means (118) associated with said first signal receiving means (104) for producing an output logic signal indicative that said A + B signals is within a predetermined range, said second comparator means (118) being arranged to produce a first logic output signal; fourth comparator means (112) associated with said third signal receiving means (102) for determining that said "S" curve signal is greater than a predetermined value, said third and fourth comparator means being arranged to produce a third logic output signal; logic means (168, 172, 176) for combining said first, second and third logic output signals to produce a fourth logic output signal indicative that said objective lens is within the focusing region of a linear region (228) of said "S" curve signal, said logic means being such as to require said "S" curve signal to be within predetermined limits and to require said C + D signal and said A + B signal to be within predetermined limits; and control means (180, 190, 198, . . .) responsive to said fourth logic output signal from said logic means (168, 172, 176) for controlling said focus control system to be on when in focusing range.

2. A system as claimed in claim 1 characterised by including first timing means (192) for allowing said objective lens to be within focusing range for a predetermined time before activating said focusing control system.

3. A system as claimed in claim 1 or 2 characterised by including second timing means (194) for allowing said objective lens to be outside focusing range for a predetermined time before deactivating said focusing control system.

4. A system as claimed in any preceding claim characterised in that said logic means comprises first NAND gate means (168) connected to receive as a first input said third logic output signal and as a second input said first logic output signal, second NAND gate means (172) connected to receive as a first input said third logic output signal and as a second input said second logic output signal, and third NAND gate means (176) connected to receive as a first input the output of said first gate means and as a second input the output of the second gate means, said third gate means producing as an output said fourth logic signal.

**Patentansprüche**

1. Steuersystem zur Fokusier-Initialisierung für eine optische Aufzeichnungseinrichtung, die eine Objektivlinse aufweist, die relativ nahe an einem Aufzeichnungsmedium angeordnet ist und durch ein Fokusier-Steuersystem gesteuert wird, das eine Anzahl von Lichtdetektoren aufweist, wobei das Fokusier-Initialisierungssystem folgende Teile aufweist: erste Signalempfangseinrichtungen (104), die als ein Eingangssignal eine A+B-Analogsignal von zwei Lichtedetektoren (A,B) empfangen, zweite Signalempfangseinrichtungen (106), die als ein Eingangssignal ein C+D-Analogsignal von weiteren zwei Lichtdetektoren (C,D) empfangen, erste den zweiten Signalempfangseinrichtungen zugeordnete Vergleichereinrichtungen (120) zur Bestimmung, daß das C+D-Signal innerhalb eines vorgegebenen Bereiches liegt, wobei die ersten Vergleichereinrichtungen (120) so ausgebildet sind, daß sie ein zweites Logik-Ausgangssignal erzeugen, dritte Signalempfangseinrichtungen (102), die als ein Eingangssignal ein "S"-Kurven-Analogsignal empfangen, und dritte, den dritten Signalempfangseinrichtungen zugeordnete Vergleichereinrichtungen (110), die bestimmen, daß das "S"-Kurven-Eingangssignal kleiner als ein bestimmter vorgegebener Wert ist, dadurch gekennzeichnet, daß den ersten Signalempfangseinrichtungen (104) zweite Vergleichereinrichtungen (118) zur Erzeugung eines Logik-Ausgangssignals zugeordnet sind, das anzeigt, daß die A+B-Signale innerhalb eines vorgegebenen Bereiches liegen, daß die zweiten Vergleichereinrichtungen (118) so ausgebildet sind, daß sie ein erstes Logik-Ausgangssignal erzeugen, daß den dritten Signalempfangs einrichtungen (102) vierte Vergleichereinrichtungen (112) zur Bestimmung, daß das "S"-Kurvensignal größer als ein vorgegebener Wert ist, zugeordnet sind, daß die dritten und vierten Vergleichereinrichtungen so ausgebildet sind, daß sie ein drittes Logik-Ausgangssignal erzeugen, daß Logik-Einrichtungen (168, 172, 176) zur Kombination der ersten, zweiten und dritten Logik-Ausgangssignale zur Erzeugung eines vierten Logik-Ausgangssignals vorgesehen sind, das anzeigt, daß sich die Objektivlinse innerhalb des Fokusierungsbereiches eines linearen Bereiches (228) des "S"-Kurvensignals befindet, daß die Logik-Einrichtungen derart sind, daß sie erfordern, daß das "S"-Kurvensignal innerhalb vorgegebener Grenzwerte liegt, und daß sie erfordern, daß das C+D-Signal und das A+B-Signal innerhalb vorgegebener Grenzwerte liegen, und daß auf das vierte Logik-Ausgangssignal von den Logik-Einrichtungen (168, 172, 176) ansprechende Steuereinrichtungen (180, 190, 198) das Fokusier-Steuersystem so steuern, daß es eingeschaltet ist, wenn es sich im Fokusierbereich befindet.

2. System nach Anspruch 1, dadurch gekennzeichnet, daß es erste Zeitsteuereinrichtungen (192) einschließt, die es der Objektivlinse ermöglichen, sich für eine vorgegebenen Zeit in dem Fokusierbereich zu befinden, bevor das Fokusier-Steuersystem aktiviert wird.

3. System nach Anspruch 1 oder 2, dadurch gekennzeichnet, daß es zweite Zeitsteuereinrichtungen (194) einschließt, die es ermöglichen, daß sich die Objektivlinse für eine vorgegebene Zeit außerhalb des Fokusierbereiches befindet, bevor das Fokusier-Steuersystem deaktiviert wird.

4. System nach einem der vorhergehenden Ansprüche, dadurch gekennzeichnet, daß die Logik-Einrichtungen erste NAND-Gattereinrichtungen (168), die zum Empfang des dritten Logik-Ausgangssignals als erstes Eingangssignal und des ersten Logik-Ausgangssignals als zweites Eingangssignal angeschaltet sind, zweite NAND-Gattereinrichtungen (172), die zum Empfang des dritten Logik-Ausgangssignals als erstes Eingangssignal und des zweiten Logik-Ausgangssignals als zweites Eingangssignal angeschaltet sind, und dritte NAND-Gattereinrichtungen (176) umfassen, die zum Empfang des Ausgangssignals der ersten Gattereinrichtungen als erstes Eingangssignal und des Ausgangssignals der zweiten Gattereinrichtungen als zweites Eingangssignal angeschaltet sind, und daß die dritten Gattereinrichtungen als Ausgangssignal das vierte Logik-Signal erzeugen.

**Revendications**

1. Système de commande d'initialisation de focalisation pour un dispositif d'enregistrement optique comprenant un objectif disposé relativement près d'un support d'enregistrement et commandé par un système de commande de focalisation comprenant plusieurs détecteurs de lumière, ledit système d'initialisation de focalisation comportant: un premier dispositif de réception de signaux (104) qui reçoit à une entrée un signal analogique A + B provenant de deux détecteurs de lumière A, B; un second dispositif récepteur de signaux (106) qui reçoit à une entrée un signal analogique (C + D) provenant de deux autres détecteurs de lumière (C, D); un premier comparateur (120) associé avec ledit second dispositif récepteur de signaux pour déterminer si ledit signal (C + D) se situe dans une plage déterminée, ledit premier comparateur (120) étant agencé pour produire un second signal de sortie logique; un troisième dispositif récepteur de signaux (102) qui reçoit à une entrée un signal analogique de courbe "S"; et un troisième comparateur (110) associé avec ledit troisième dispositif récepteur de signaux, ledit troisième comparateur (110) déterminant si le signal d'entrée de courbe "S" est inférieur à une certaine valeur prédéterminée, caractérisé en ce qu'il comporte un second comparateur (118) associé avec ledit premier dispositif de réception de signaux (104) pour produire un signal logique de sortie indiquant que ledit signal A + B se situe dans un plage déterminée, ledit second comparateur (118) étant agencé pour produire un premiersignal de sortie logique; un quatrième comparateur (112) associé avec ledit troisième dispositif de réception de signaux (102) pour déterminer si ledit signal de courbe "S" est supérieur à une valeur prédéterminée, ledit troisième et ledit quatrième comparateur étant agencés pour produire un troisième signal de sortie logique; un circuit logique (168, 172, 176) destiné à combiner le premier, le second et le troisième signaux de sortie logiques pour produire un quatrième signal de sortie logique indiquant que ledit objectif se trouve dans la région de focalisation d'une région linéaire (228) dudit signal de courbe "S", ledit circuit logique étant tel qu'il impose que ledit signal de courbe "S" se situe dans des limites prédéterminées et impose que ledit signal C + D et ledit signal A + B se situent dans des limites prédéterminées, et un dispositif de commande (180, 190, 198 . . .) réagissant audit quatrième signal de sortie logique provenant dudit circuit logique (168, 172, 176) en commandant ledit système de commande de focalisation pour qu'il soit mis en marche lorsqu'il est dans la plage de focalisation.

2. Système selon la revendication 1, caractérisé en ce qu'il comporte un premier dispositif de temporisation (192) qui permet que ledit objectif soit dans la plage de focalisation pendant un temps prédéterminé avant l'activation dudit système de commande de focalisation.

3. Système selon la revendication 1 ou 2, caractérisé en ce qu'il comporte un second dispositif de temporisation (194) qui permet que ledit objectif se trouve à l'extérieur de la plage de focalisation pendant un temps prédéterminé avant la désactivation dudit système de commande de focalisation.

4. Système selon l'une quelconque des revendications précédentes, caractérisé en ce que ledit circuit logique comporte une première porte NON-ET (168) connectée pour recevoir à une première entrée ledit troisième signal de sortie logique et à une seconde entrée ledit premier signal de sortie logique, une seconde porte NON-ET (172) connectée pour recevoir à une première entrée ledit troisième signal de sortie logique et à une seconde entrée ledit second signal de sortie logique, et une troisième porte NON-ET (176) connectée pour recevoir à une première entrée la sortie de ladite première porte et à une seconde entrée la sortie de ladite seconde porte, ladite troisième porte produisant à sa sortie ledit quatrième signal logique.

FIG.1A

FIG.1B

FIG.1C

FIG.1D

FIG.2

POWER AMPLIFIER

BI POLAR SIGNAL

FOCUS VOICE COIL

FIG.3

0 083 838

FIG. 4A

FIG. 4B

LINEAR REGION = (IN BAND) (A+B) + (IN BAND) (C+D)

FIG. 5